(19)

Europäisches
Patentamt
European
Patent Office
Office européen
des brevets

(11) **EP 4 300 816 A1**

(12) **EUROPEAN PATENT APPLICATION**
published in accordance with Art. 153(4) EPC

(43) Date of publication:
**03.01.2024 Bulletin 2024/01**

(21) Application number: **22759834.9**

(22) Date of filing: **25.02.2022**

(51) International Patent Classification (IPC):
***H02S 50/10*** *(2014.01)*

(52) Cooperative Patent Classification (CPC):
**H02S 50/10**

(86) International application number:
**PCT/JP2022/008041**

(87) International publication number:
**WO 2022/181800 (01.09.2022 Gazette 2022/35)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **25.02.2021 JP 2021029286**

(71) Applicant: Kyocera Corporation
**Kyoto-shi Kyoto 612-8501 (JP)**

(72) Inventors:
• **INO, Yuji
Koriyama-shi, Fukushima 963-0298 (JP)**

• **SHIRASAWA, Katsuhiko
Koriyama-shi, Fukushima 963-0298 (JP)**
• **TAKATO, Hidetaka
Koriyama-shi, Fukushima 963-0298 (JP)**
• **HEITO, Shunsuke
Kyoto-shi, Kyoto 612-8501 (JP)**
• **NIIRA, Koichiro
Kyoto-shi, Kyoto 612-8501 (JP)**
• **ITO, Norikazu
Kyoto-shi, Kyoto 612-8501 (JP)**

(74) Representative: **TBK
Bavariaring 4-6
80336 München (DE)**

(54) **METHOD FOR MEASURING HIGH-TEMPERATURE PHOTO-INDUCED DEGRADATION AND
METHOD FOR PREDICTING OUTPUT DEGRADATION RATE OF SOLAR BATTERY**

(57)    Provided is a method of measuring light and elevated temperature induced degradation, the method including a first light soaking step of injecting carriers into p-type crystalline silicon and maintaining the p-type crystalline silicon at 50°C or higher and 150°C or lower until the p-type crystalline silicon has reached a regenerated state, a first measurement step of measuring a first degradation amount of the p-type crystalline silicon in the first light soaking step, a dark annealing step of performing a heat treatment on the p-type crystalline silicon at higher than 150°C and 250°C or lower, a second light soaking step of injecting carriers into the p-type crystalline silicon and maintaining the p-type crystalline silicon at 50°C or higher and 150°C or lower until the p-type crystalline silicon has reached a regenerated state, a second measurement step of measuring a second degradation amount of the p-type crystalline silicon in the second light soaking step, and a calculation step of calculating a light and elevated temperature induced degradation amount of the p-type crystalline silicon based on the first degradation amount and the second degradation amount.

FIG. 1

| RELATED ART | BO-LID STABILIZATION TREATMENT | | LeTID TEST | |
| --- | --- | --- | --- | --- |
| | 25°C ONE DAY TO ONE WEEK | | >50°C | |

| PRESENT CASE | LS-1:1sun (LeTID + BO-LID) | DA TREATMENT | LS-2:1sun (BO-LID) |
| --- | --- | --- | --- |
| | 95°C UNTIL RECOVERY | 175°C 30 min | 95°C UNTIL RECOVERY |

EP 4 300 816 A1

**Description**

TECHNICAL FIELD

The present invention relates to a method of measuring light and elevated temperature induced degradation and a method of predicting a power degradation rate of a photovoltaic device.

BACKGROUND OF INVENTION

A light degradation phenomenon of a photovoltaic device is typically known as light-induced degradation (LID). Light and elevated temperature induced degradation (LeTID) which is one of LID phenomena is degradation considered as a problem in p-type crystalline silicon PERC cells that are currently the mainstream. However, the root cause of the LeTID degradation has not yet elucidated. The mechanism of LeTID is required to be elucidated to minimize the influence of the LeTID degradation. Further, the loss caused by LeTID needs to be quantified to elucidate the mechanism of LeTID.

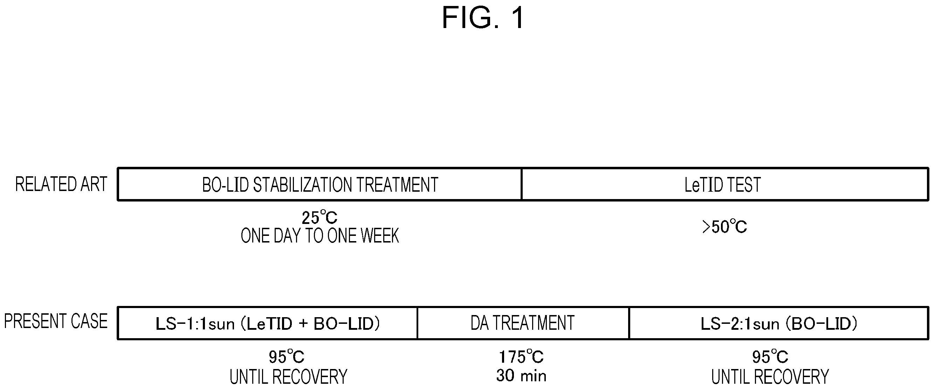

Non Patent Literature 1 describes that the temperature of a cell or a module is maintained at 25°C before an LeTID test in order to separate the influence of boron-oxygen complex-related light induced degradation (BO-LID) from LeTID, as illustrated in FIG. 1. Further, injection of the current near Isc or light irradiation is carried out. At this time, a BO-LID stabilization treatment is performed for a period of approximately one day to one week. The treatment is performed by using a difference between temperature regions where LeTID and BO-LID occur. LeTID is found significantly at a temperature of 50°C or higher while BO-LID occurs even at 25°C.

CITATION LIST

NON PATENT LITERATURE

Non Patent Literature 1: F. Kersten, M. Pander, M. Koentopp, M. Turek, W. Bergholz, T. Pernau, Towards a Test Standard of Light and Elevated Temperature-Induced Degradation, PV-Tech, London 2020

SUMMARY

PROBLEM TO BE SOLVED

However, a sample is heated by Joule heat due to injection of a current or irradiation with light in the BO-LID stabilization treatment of the related art for separating the influence of BO-LID from LeTID. As a result, the temperature of the sample is 25°C or higher, and thus LeTID may occur. Therefore, BO-LID may not be accurately separated from LeTID in the BO-LID stabilization treatment of the related art. Further, the light degradation phenomenon of a photovoltaic device over time may not be accurately predicted by separating BO-LID from LeTID in the BO-LID stabilization treatment due to this problem.

The present invention has been made in consideration of the above-described problems, and the present invention provides a method of measuring light and elevated temperature induced degradation which enables reliable separation of the influence of BO-LID from LeTID. Further, the present invention enables accurate prediction of the rate of degradation over time caused by the light degradation phenomenon of a photovoltaic device in consideration of temperature dependence of LeTID and BO-LID and a degradation behavior with respect to the time.

SOLUTION TO PROBLEM

The present invention provides the following means to solve the above-described problems.

A method of measuring light and elevated temperature induced degradation includes a first light soaking step, a first measurement step, a dark annealing step, a second light soaking step, a second measurement step, and a calculation step. The first light soaking step is a step of injecting carriers into p-type crystalline silicon and maintaining the p-type crystalline silicon at 50°C or higher and 150°C or lower until the p-type crystalline silicon has reached a regenerated state. The first measurement step is a step of measuring a first degradation amount of the p-type crystalline silicon in the first light soaking step. The dark annealing step is a step of performing a heat treatment on the p-type crystalline silicon at higher than 150°C and 250°C or lower. The second light soaking step is a step of injecting carriers into the p-type crystalline silicon and maintaining the p-type crystalline silicon at 50°C or higher and 150°C or lower until the p-type crystalline silicon has reached a regenerated state. The second measurement step is a step of measuring a second degradation amount of the p-type crystalline silicon in the second light soaking step. The calculation step is a step of calculating a light and elevated temperature induced degradation amount of the p-type crystalline silicon based on the first degradation amount and the second degradation amount.

ADVANTAGEOUS EFFECT

According to an embodiment of the present invention, it is possible to provide a method of measuring light and elevated temperature induced degradation which enables reliable separation of the influence of BO-LID from LeTID. Further, according to another embodiment of the present invention, it is possible to accurately predict the rate of degradation over time caused by the light degradation phenomenon of a photovoltaic device in consideration of temperature dependence of LeTID and BO-LID and a degradation behavior with respect to the time.

BRIEF DESCRIPTION OF THE DRAWINGS

FIG. 1 is a diagram illustrating a method of measuring light and elevated temperature induced degradation according to examples and comparative examples of the present invention.
FIG. 2 is a graph illustrating an LS-DA cycle of BO-LID.
FIG. 3 is a graph illustrating an LS-DA cycle of LeTID.
FIG. 4(a) to 4(d) are graphs illustrating measurement results of the examples of the present invention and calculation results according to model formulae.
FIG. 5 is a flowchart illustrating the method of measuring light and elevated temperature induced degradation according to the examples of the present invention.
FIG. 6 is a flowchart illustrating a method of fitting light and elevated temperature induced degradation according to the examples of the present invention.
FIG. 7 is a diagram illustrating a measuring device for light and elevated temperature induced degradation according to an embodiment of the present invention.
FIG. 8 is a flowchart illustrating a method of predicting a degradation behavior of BO-LID according to the examples of the present invention.
FIG. 9 is a flowchart illustrating a method of predicting a degradation behavior of LeTID according to the examples of the present invention.
FIG. 10 is a flowchart illustrating a method of predicting a power degradation rate of a photovoltaic device from the degradation behaviors of BO-LID and LeTID according to the examples of the present invention.

DESCRIPTION OF EMBODIMENTS

A method of measuring light and elevated temperature induced degradation according to an embodiment of the present invention will be described.

(First light soaking step)

The method of measuring light and elevated temperature induced degradation according to the present embodiment includes a first light soaking step. In the first light soaking step, a heat treatment is performed while carriers are injected into p-type crystalline silicon until the p-type crystalline silicon has reached a regenerated state. The p-type crystalline silicon is not particularly limited, and for example, p-type crystalline silicone used in a solar module may be used. Further, the p-type crystalline silicon described here includes a solar cell that has undergone a cell making step. That is, each step may be performed on a solar cell in the method of measuring light and elevated temperature induced degradation according to the present embodiment. The carrier injection may be performed by, for example, a method of irradiating p-type crystalline silicon with light or a method of passing a current through p-type crystalline silicon. In the method of irradiating p-type crystalline silicon with light, the p-type crystalline silicon may be irradiated with light having a wavelength of less than 1180 nm with an illumination intensity of greater than 0.3 kW/m$^2$, preferably greater than 1 kW/m$^2$, and more preferably greater than 3 kW/m$^2$. In the method of passing a current through p-type crystalline silicon, a voltage greater than 0.4 V and preferably 0.7 V may be applied to the p-type crystalline silicon. In the description below, the carrier injection is performed by irradiating with light with an illumination intensity of 1 kW/m$^2$. Note that, the light soaking will also be referred to as LS.

The expression "p-type crystalline silicon has reached a regenerated state" denotes that a minority carrier lifetime of the p-type crystalline silicon during the carrier injection is recovered to the same level as the minority carrier lifetime before the start of the carrier injection into the p-type crystalline silicon in an initial state. The same level may be determined according to a measurement error allowable in the measurement. The voltage of the p-type crystalline silicon during the carrier injection is -2 mV or greater and 2 mV or less and preferably -0.5 mV or greater and 0.5 mV or less with respect to the voltage of the p-type crystalline silicon before the start of the carrier injection. Note that, the voltage described here denotes an open-circuit voltage and will also be referred to as $V_{oc}$. The initial state denotes a state where LeTID and BO-LID have not yet occurred. When the p-type crystalline silicon is not in the initial state, the p-type crystalline silicon may be subjected to a heat treatment in a dark place under a condition of higher than 150°C and 250°C or lower.

The minority carrier lifetime denotes an average time until excess minority carriers injected to the p-type crystalline silicon are recombined with majority carriers. The minority carrier lifetime can be measured by Suns-$V_{oc}$ measurement or photoconductance measurement. When the minority carrier lifetime is measured by Suns-$V_{oc}$ measurement, a minority carrier lifetime $\tau_{eff}$ is represented by the following equation as a function of the voltage $V_{oc}$ to be measured.

$$\tau_{eff} = \{n_i^2 e \times p(qV_{oc}/kT)\}/\{J_{ph}(N_{AC} + \Delta n)/qW\}$$

Here, $J_{ph}$ represents a photocurrent density, $N_{AC}$ represents an acceptor concentration, W represents a sample thickness, $n_i$ represents an intrinsic carrier concentration, q represents an elementary charge, k represents the Boltzmann constant, and T represents an absolute temperature.

The equation shown above is an equation applied in a quasi-steady state. An equation including the influence in a transient state may be used. The equation described in, for example, M. J Kerr, A Cuevas, "Generalized analysis of quasi-steady-state and transient decay open circuit voltage measurements", Journal of Applied Physics 91, 399 (2002) can be used.

When the minority carrier lifetime is measured by photoconductance measurement, the minority carrier lifetime $\tau_{eff}$ is represented by the following equation.

$$\tau_{eff} = \sigma_L/\{J_{ph}(\mu_n + \mu_p)\}$$

$\sigma_L$ represents photoconductance, $J_{ph}$ represents a photocurrent density, $\mu_n$ represents electron mobility, and $\mu_p$ represents positive hole mobility.

The lifetime using photoluminescence (PL) may be derived by the method described in the literature J. A. Giesecke, M. C. Schubert, D. Walter, and W. Warta, "Minority carrier lifetime in silicon wafers from quasi-steady-state photoluminescence", Appl. Phys. Lett. 97, 092109 (2010).

Further, a value obtained from a conversion function of commercially available software from $V_{oc}$ to $\tau$ may be used as $\tau_{eff}$.

In the first light soaking step, the p-type crystalline silicon is maintained at 50°C or higher and 150°C or lower. The atmosphere in which the p-type crystalline silicon is maintained may be an air atmosphere or an inert gas atmosphere such as nitrogen. Thus, LeTID and BO-LID of the p-type crystalline silicon can be made to occur at the same time. When the temperature of maintaining the p-type crystalline silicon is lower than 50°C, LeTID of the p-type crystalline silicon may not occur. Therefore, there is a possibility that the influence of BO-LID cannot be reliably separated from LeTID. When the temperature of maintaining the p-type crystalline silicon is greater than 150°C, recovery of BO-LID may occur. For this reason, there is a possibility that the influence of BO-LID cannot be reliably separated from LeTID. The temperature of maintaining the p-type crystalline silicon is preferably 65°C or higher and more preferably 80°C or higher. Thus, in the present embodiment, the time for measuring light and elevated temperature induced degradation can be further shortened. Further, in the present embodiment, LeTID and BO-LID can be made to reliably occur. In addition, the temperature of maintaining the p-type crystalline silicon is preferably 130°C or lower and more preferably 100°C or lower.

In the first light soaking step, the p-type crystalline silicon may be maintained at 50°C or higher and 150°C or lower. In the first light soaking step, the time for maintaining the p-type crystalline silicon may be set to 0.25 hours or longer and 1000 hours or shorter. When the time for maintaining the p-type crystalline silicon is 0.25 hours or longer, the p-type crystalline silicon can be reliably maintained at a set temperature. When the time for maintaining the p-type crystalline silicon is 1000 hours or shorter, the time for maintaining light and elevated temperature induced degradation can be further shortened. The maintaining time denotes the time for maintaining the p-type crystalline silicon at 50°C or higher and 150°C or lower. When the p-type crystalline silicon is maintained at 50°C or higher and 150°C or lower in the first light soaking step, the maintaining time denotes the time for maintaining the p-type crystalline silicon at 50°C or higher and 150°C or lower in each light soaking step.

(First measurement step)

The method of measuring light and elevated temperature induced degradation according to the present embodiment includes a first measurement step. In the first measurement step, the first degradation amount of the p-type crystalline silicon is measured. The first degradation amount is a difference between a measured value at a predetermined time of the first light soaking step and a measured value before the first light soaking step. The measured value may be the minority carrier lifetime of the p-type crystalline silicon.

(Dark annealing step)

The method of measuring light and elevated temperature induced degradation according to the present embodiment includes a dark annealing step. In the dark annealing step, the p-type crystalline silicon on which the first light soaking step has been performed is subjected to a heat treatment at higher than 150°C and 250°C or lower. The atmosphere in which the heat treatment is performed may be an air atmosphere or an inert atmosphere such as nitrogen. Thus, BO-LID of the p-type crystalline silicon can be returned to the state before the first light soaking step is performed. As a result, in the method of measuring light and elevated temperature induced degradation according to the embodiment of the present invention, the influence of BO-LID can be reliably separated from LeTID. When the heat treatment temperature of the p-type crystalline silicon is 150°C or lower, BO-LID of the p-type crystalline silicon cannot be reliably returned to the state before the first light soaking step is performed. Therefore, there is a possibility that the influence of BO-LID cannot be separated from LeTID. On the other hand, when degradation other than LeTID and BO-LID may occur in the p-type crystalline silicon when the heat treatment temperature of the p-type crystalline silicon is higher than 250°C. As a result, LeTID may not be accurately measured. In the method of measuring light and elevated temperature induced degradation according to the embodiment of the present invention, the p-type crystalline silicon is subjected to the heat treatment in a dark place. Note that, dark annealing will also be referred to as DA.

In the dark annealing step, the heat treatment time of the p-type crystalline silicon may be set to 5 minutes or longer and 60 minutes or shorter. When the heat treatment time of the p-type crystalline silicon is 5 minutes or longer, BO-LID of the p-type crystalline silicon can be reliably returned to the state before the first light soaking step is performed. The heat treatment time is a time at which the p-type crystalline silicon is subjected to a heat treatment at higher than 150°C and 250°C or lower. The heat treatment may be performed by using, for example, a known heat treatment furnace.

(Second light soaking step)

The method of measuring light and elevated temperature induced degradation according to the present embodiment includes a second light soaking step. In the second light soaking step, a heat treatment is performed while carriers are injected into the p-type crystalline silicon until the p-type crystalline silicon after the dark annealing step has reached a regenerated state. Further, carriers can be injected by using the same method as in the first light soaking step.

The expression "p-type crystalline silicon has reached a regenerated state" denotes that a minority carrier lifetime of the p-type crystalline silicon during the carrier injection is recovered to the same level as the minority carrier lifetime of the p-type crystalline silicon before the start of the carrier injection into the p-type crystalline silicon in an initial state. The same level may be determined according to a measurement error allowable in the measurement. The voltage of the p-type crystalline silicon during the carrier injection is -2 mV or greater and 2 mV or less and preferably -0.5 mV or greater and 0.5 mV or less with respect to the voltage of the p-type crystalline silicon before the start of the carrier injection. The p-type crystalline silicon is subjected to a heat treatment in the dark annealing step. Therefore, BO-LID defects in the p-type crystalline silicon at the start of the carrier injection in the second light soaking step are considered to be in an initial state.

In the second light soaking step, the p-type crystalline silicon is maintained at 50°C or higher and 150°C or lower. Thus, BO-LID of the p-type crystalline silicon can be made to occur. When the temperature of maintaining the p-type crystalline silicon is lower than 50°C, LeTID may not occur even if the p-type crystalline silicon is in a state where LeTID occurs. Therefore, there is a possibility that the influence of BO-LID cannot be reliably separated from LeTID. When the temperature of maintaining the p-type crystalline silicon is higher than 150°C, recovery of BO-LID may occur. For this reason, there is a possibility that the influence of BO-LID cannot be reliably separated from LeTID. Further, in the method of measuring light and elevated temperature induced degradation according to the embodiment of the present invention, the temperature of maintaining the p-type crystalline silicon is preferably 65°C or higher and more preferably 80°C or higher. Thus, the time for measuring light and elevated temperature induced degradation can be further shortened. In addition, the temperature of maintaining the p-type crystalline silicon is preferably 130°C or lower and more preferably 100°C or lower.

It is more preferable that the temperature of maintaining the p-type crystalline silicon in the first light soaking step is the same as the temperature of maintaining the p-type crystalline silicon in the second light soaking step. Thus, the results obtained by the BO-LID stabilization treatment can be compared with the results obtained by the LeTID test. As a result, the influence of BO-LID can be more reliably separated from LeTID. The expression "temperature maintaining the p-type crystalline silicon in the first light soaking step is the same as the temperature of maintaining the p-type crystalline silicon in the second light soaking step" denotes that the difference in temperature is 0°C or higher and 2°C or lower. When the temperature of maintaining the p-type crystalline silicon in the first light soaking step is not the same as the temperature of maintaining the p-type crystalline silicon in the second light soaking step, the measurement result may be calculated using a theoretical formula such that the temperatures are set to be the same as each other. Examples of the theoretical formula include the Arrhenius' equation.

In the second light soaking step, the time for maintaining the p-type crystalline silicon may be 0.25 hours or longer and 1000 hours or shorter. When the time for maintaining the p-type crystalline silicon is 0.25 hours or longer, the p-type crystalline silicon can be reliably maintained at a set temperature. When the time for maintaining the p-type crystalline silicon is 1000 hours or shorter, the time for measuring light and elevated temperature induced degradation can be further shortened. The maintaining time denotes a time for maintaining the p-type crystalline silicon at 50°C or higher and 150°C or lower.

(Second measurement step)

The method of measuring light and elevated temperature induced degradation according to the present embodiment includes a second measurement step. In the second measurement step, the second degradation amount of the p-type crystalline silicon is measured. The second degradation amount is a difference between a measured value at a predetermined time of the second light soaking step and a measured value before the second light soaking step. The measured value may be the minority carrier lifetime of the p-type crystalline silicon. It is preferable that the second degradation amount is the same physical quantity as the physical quantity of the first degradation amount.

(Calculation step)

The method of measuring light and elevated temperature induced degradation according to the present embodiment includes a calculation step. In the calculation step, the light and elevated temperature induced degradation amount of the p-type crystalline silicon is calculated using the first degradation amount and the second degradation amount. When the first degradation amount and the second degradation amount are different from each other in terms of the physical quantity, the light and elevated temperature induced degradation amount may be calculated after performing calculation for unifying the physical quantities of the first degradation amount and the second degradation amount.

The effects of the method of measuring light and elevated temperature induced degradation according to the present embodiment will be described.

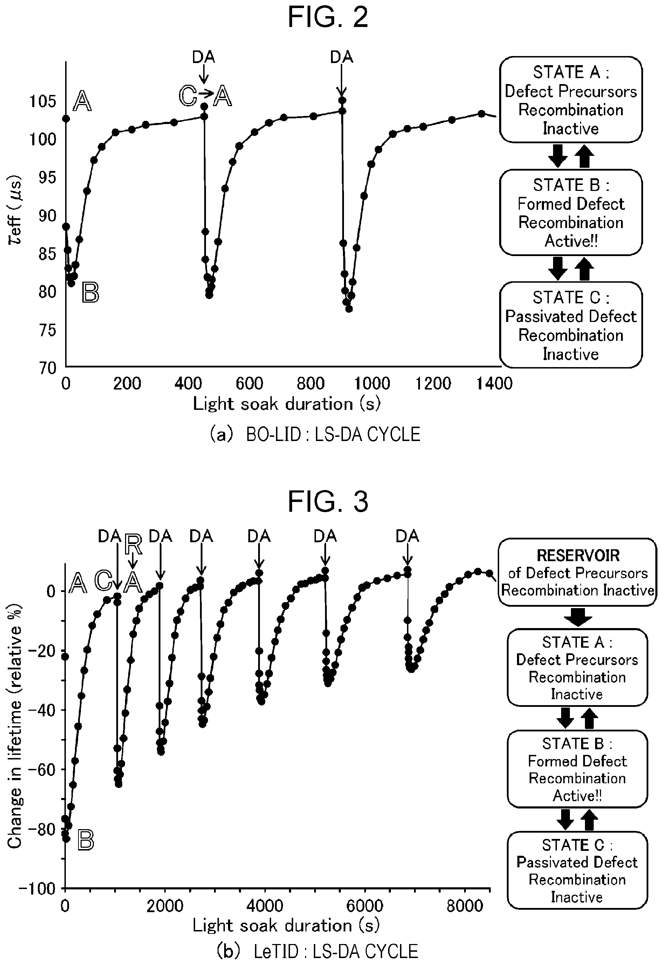

FIG. 2 is a diagram explaining the general principle of light soaking (LS)-dark anneal (DA) cycle of BO-LID (source: A. C. N. Wenham et al., "Hydrogen-induced degradation", Proc. IEEE 7th World Conf. Photovolt. Energy Convers., pp. 1 to 8, Jun. 2018). As illustrated in FIG. 2, BO-LID defects in the p-type crystalline silicon are initially in a state A. Note that, the state A is a state of a recombination-inactive defect precursor. When the p-type crystalline silicon is maintained at a predetermined temperature A while carrier injection is carried out, the p-type crystalline silicon is degraded and has reached a state B. Note that, the state B is a state of a recombination-active defect. When the p-type crystalline silicon is further maintained at the predetermined temperature A while carrier injection is carried out, the p-type crystalline silicon is recovered and has reached a state C from the state B. Note that, the state C is a regenerated state where defects are inactivated. When the p-type crystalline silicon in the C state is subjected to a heat treatment in a dark place at a predetermined temperature B, the p-type crystalline silicon is returned to the state A. Further, when the p-type crystalline silicon is maintained at the predetermined temperature A again while carrier injection is carried out, the state A of the p-type crystalline silicon similarly transitions to the state B and then to a state C. At this time, the curve of the first LS-DA cycle is substantially the same as the curve of the second LS-DA cycle. The reason for this is considered to be that in regard to BO-LID, a reverse reaction of a reaction occurring at the predetermined temperature A occurs even when the p-type crystalline silicon is subjected to a heat treatment in a dark place under a condition of a predetermined temperature of B or lower.

FIG. 3 is a diagram for explaining the general principle of the LS-DA cycle of LeTID (source: A. C. N. Wenham et al., "Hydrogen-induced degradation", Proc. IEEE 7th World Conf. Photovolt. Energy Convers., pp. 1 to 8, Jun. 2018). As illustrated in FIG. 3, when the p-type crystalline silicon is maintained at a predetermined temperature C or lower while carrier injection is carried out, the p-type crystalline silicon is degraded, and the state transitions to state B and then to the state C. Some of the p-type crystalline silicon-inactivated defects are not returned to the state A even when the p-type crystalline silicon in the state C is subjected to a heat treatment in a dark place under a condition of a predetermined temperature D. Further, the p-type crystalline silicon is maintained at the predetermined temperature C again while carrier injection is carried out, the degradation amount of the p-type crystalline silicon is less than the first degradation amount. Further, when the p-type crystalline silicon is continuously maintained at the predetermined temperature C while carrier injection is carried out, a degradation width does not substantially change. The reason for this is considered to be that in regard to LeTID, a reverse reaction of a reaction occurring at the predetermined temperature C does not occur even when the p-type crystalline silicon is subjected to a heat treatment in a dark place under a condition of a predetermined temperature of D.

When the first light soaking step of injecting carriers into the p-type crystalline silicon and maintaining the p-type crystalline silicon at 50°C or higher and 150°C or lower is performed, both LeTID and BO-LID occur. Therefore, the first degradation amount measured in the first light soaking step is considered to be the total degradation amount of LeTID and BO-LID. Further, in regard to BO-LID, since a reverse reaction of a reaction occurring when the p-type crystalline silicon is maintained at 50°C or higher and 150°C or lower occurs when the dark annealing step of performing a heat treatment on the p-type crystalline silicon at higher than 150°C and 250°C or lower, BO-LID is returned to the state before the first light soaking step is performed.

In regard to LeTID, since a reverse reaction of a reaction occurring when the p-type crystalline silicon is maintained at 50°C or higher and 150°C or lower under the carrier injection does not occur even when the dark annealing step is performed, LeTID is not returned to the state before the first light soaking step is performed. Accordingly, when the second light soaking step of injecting carriers into the p-type crystalline silicon and maintaining the p-type crystalline silicon at 50°C or higher and 150°C or lower is performed, only BO-LID occurs. That is, the second degradation amount measured in the second light soaking step is considered to be BO-LID. Therefore, LeTID can be accurately quantified by using the first degradation amount measured in the first light soaking step and the second degradation amount measured in the second light soaking step.

In the method of the related art, the temperature of the BO-LID stabilization treatment is different from the temperature of the LeTID test. Therefore, the results obtained by the BO-LID stabilization treatment and the results obtained by the LeTID test are difficult to directly compared to each other. As a result, determination whether LeTID and BO-LID can be accurately separated from each other is difficult to make. On the contrary, according to the method of measuring light and elevated temperature induced degradation of the present embodiment, the temperature at which the first degradation amount is measured and the temperature at which the second degradation amount is measured can be set to be the same as each other. Therefore, the influence of BO-LID can be reliably separated from LeTID. As a result, LeTID of the p-type crystalline silicon can be more accurately quantified.

(Prediction of degradation rate caused by light degradation of photovoltaic device)

A method of predicting a power degradation rate of a photovoltaic device containing the p-type crystalline silicon from the degradation behaviors of BO-LID and LeTID according to the present embodiment will be described. The method of predicting the power degradation rate of the photovoltaic device according to the present embodiment may be carried out by performing the first light soaking step and the second light soaking step on the p-type crystalline silicon at the first temperature (T1) and performing the first light soaking step and the second light soaking step on the p-type crystalline silicon at the second temperature (T2) in the method of measuring light and elevated temperature induced degradation according to the present embodiment. Further, information related to temperature dependence of BO-LID and LeTID may be calculated by using the first degradation amount and the second degradation amount obtained at the first temperature (T1) and using the first degradation amount and the second degradation amount obtained at the second temperature (T2). Thus, a time behavior of a BO-LID phenomenon and a time behavior of an LeTID phenomenon of a solar cell containing the p-type crystalline silicon and a solar module containing the p-type crystalline silicon at an optional temperature can be predicted, and thus the degradation rate of the photovoltaic device power with time can be more accurately predicted.

Specifically, reaction rate constants $k_{AB}(T1)$, $k_{AB}(T2)$, $k_{BC}(T1)$, and $k_{BC}(T2)$ are calculated from the light soaking test results for each of BO-LID and LeTID at two levels of the temperatures (T1 and T2). Here, $k_{AB}$ denotes the reaction rate constant from the state A to the state B, and $k_{BC}$ denotes the reaction rate constant from the state B to the state C.

Next, $k_{AB}(T1)$ and $k_{AB}(T2)$, and activation energy $Ea(AB)$ according to Arrehenius Equation and $k_{BC}(T1)$ and $k_{BC}(T2)$, and activation energy $Ea(BC)$ according to Arrehenius Equation are acquired for each of BO-LID and LeTID. Further, an equation for providing the reaction rate constants at optional temperatures is acquired using the acquired activation energies for each of BO-LID and LeTID.

Next, an equations for providing a change in time of the defect density is acquired from the reaction rate equation for each of BO-LID and LeTID. Further, an equation for providing a change in time of the total defect density obtained by summing the defect density of BO-LID and the defect density of LeTID is acquired.

Next, an equation of providing a change in time of $V_{oc}$ is obtained from the relationship between the total defect density and the minority carrier lifetime and the relationship between the minority carrier lifetime and an open-circuit voltage $V_{oc}$. The change in time of $V_{oc}$ can be expressed as the change rate when normalized at an initial stage $V_{oc}$, that is, as a change in time of a $V_{oc}$ degradation rate, and an equation of providing a change in time of the $V_{oc}$ degradation rate is obtained.

Next, an equation of providing a change in time of an $I_{sc}$ degradation rate is obtained from the relationship between the $V_{oc}$ degradation rate and the $I_{sc}$ degradation rate. Here, $I_{sc}$ denotes a short circuit current.

Finally, an equation of providing a change in time of a Pm degradation rate of a solar cell or a solar module is obtained from the equation of providing the change in time of the $V_{oc}$ degradation rate and the $I_{sc}$ degradation rate. Here, Pm denotes a maximum power.

As described above, since the reaction rate constant is acquired at an optional temperature, the change in time of the Pm degradation rate of the solar cell or the solar module can also be acquired at an optional temperature. That is, if the temperature of the photovoltaic device for each time of operating the photovoltaic device can be provided as the temperature, the Pm degradation rate can be obtained for each time. An annual Pm degradation rate can be acquired when annual temperature information is provided. Note that, the relationship between the temperature and the solar module is described, for example, in JP2021-002988A. In this manner, an annual power degradation rate of the photovoltaic device due to BO-LID and LeTID can be acquired.

The method of measuring light and elevated temperature induced degradation according to the present invention and the method of predicting the power degradation rate of a photovoltaic device may be performed by computer programming.

A measuring device of light and elevated temperature induced degradation according to the embodiment of the present invention will be described. Note that, the same configuration is denoted by the same reference numeral, and the description thereof may not be provided.

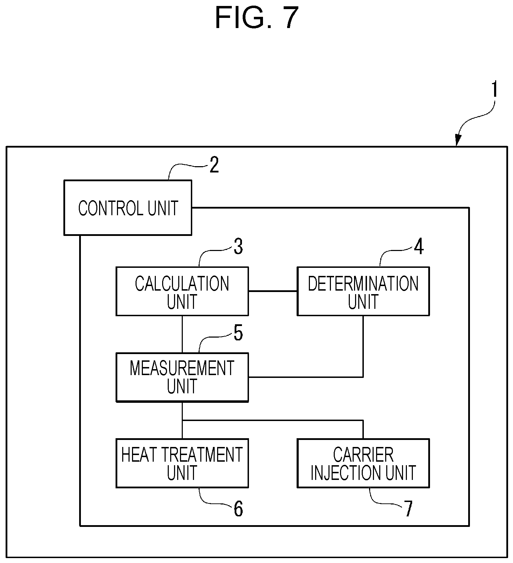

As illustrated in FIG. 7, a measuring device 1 of the light and elevated temperature induced degradation according to the present invention includes a control unit 2, a calculation unit 3, a determination unit 4, a measurement unit 5, a heat treatment unit 6, and a carrier injection unit 7.

The carrier injection unit 7 injects carriers into the p-type crystalline silicon. A known device can be used as the carrier injection unit 7. The heat treatment unit 6 performs a heat treatment on the p-type crystalline silicon. A known device can be used as the heat treatment unit 6. The measurement unit 5 measures the minority carrier lifetime of the p-type crystalline silicon to which carriers are injected. The determination unit 4 determines whether the p-type crystalline silicon is in a regenerated state using the minority carrier lifetime to be measured by the measurement unit 5. The control unit 2 terminates the carrier injection when the determination unit 4 determines that the p-type crystalline silicon is in a regenerated state, controls to perform a heat treatment on the p-type crystalline silicon, and controls to inject carriers to the p-type crystalline silicon after the completion of the heat treatment. The calculation unit 3 calculates the light and elevated temperature induced degradation amount of the p-type crystalline silicon using the minority carrier lifetime to be measured by the measurement unit 5.

EXAMPLES

Hereinafter, the effects of the present invention will be described in more detail with reference to the following examples. The conditions in the examples are merely examples of conditions employed to confirm the effects and the possibility of realization of the present invention, and the present invention is not limited to the examples of the conditions. Various conditions can be employed by the present invention as long as the purpose of the present invention is achieved within a range not departing from the gist of the present invention.

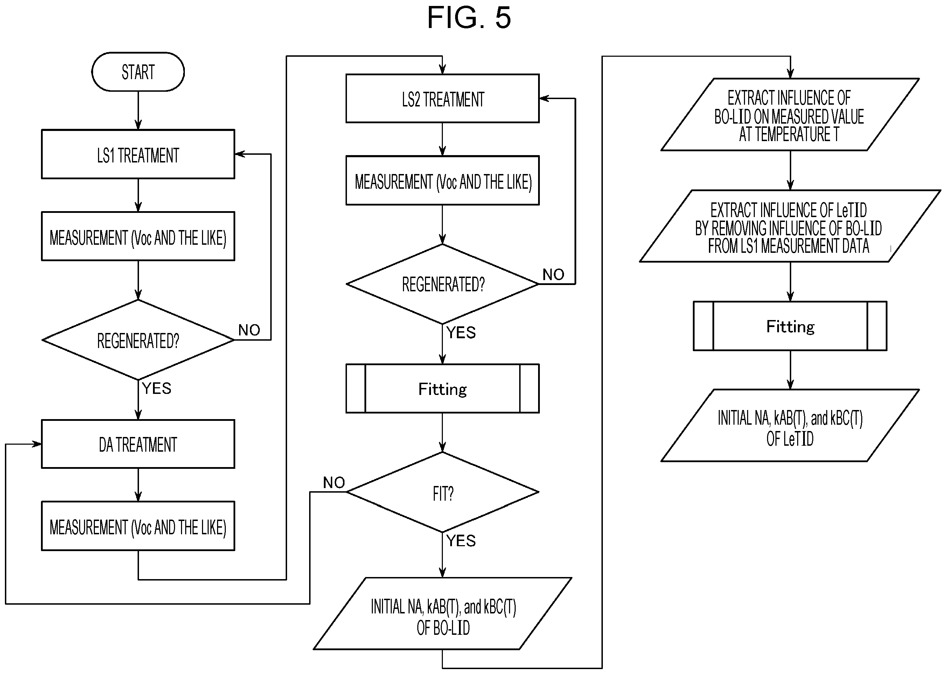

FIG. 5 is a flowchart illustrating the method of measuring light and elevated temperature induced degradation according to an example of the present invention. In the example, a passivated emitter and rear contact (PERC) cell prepared from B-dope mono-like Si was used as the p-type crystalline silicon. FIG. 1 is a diagram illustrating the method of measuring light and elevated temperature induced degradation according to an example and a comparative example of the present invention. As illustrated in FIG. 1, first, an LS1 treatment which was the first light soaking step was performed on the p-type crystalline silicon under condition of irradiation with simulated sunlight at 1 sun (1 kW/m²) at 95°C. At this time, the voltage of the p-type crystalline silicon was measured at time intervals sufficient for subsequent analysis. That is, the voltage of the p-type crystalline silicon was measured using a solar simulator at predetermined time intervals from the start of the LS1 treatment. The minority carrier lifetime was calculated using the measured voltage. The LS 1 treatment was performed until the p-type crystalline silicon had reached a regenerated state in which the voltage was recovered to an initial level after the minority carrier lifetime of the p-type crystalline silicon was further degraded than LeTID and BO-LID, and the treatment time of the LS1 treatment was 322 h. A state where the voltage of the p-type crystalline silicon was - 0.5 mV or greater and 0.5 mV or less of the voltage before the LS1 treatment was defined as the regenerated state.

Next, a DA treatment, which is a dark annealing step, was performed on the p-type crystalline silicon in the regenerated state in a dark place at 175°C for 30 minutes. Thereafter, an LS2 treatment, which is the second light soaking step, was performed under conditions of irradiation with simulated sunlight 1 sun at 95°C. Similarly to LS1, the voltage of the p-type crystalline silicon was measured at time intervals sufficient for subsequent analysis. That is, the voltage of the p-type crystalline silicon was measured using a solar simulator at predetermined time intervals from the start of the LS2 treatment. The minority carrier lifetime was calculated using the measured voltage. The LS2 treatment was performed until the p-type crystalline silicon had reached a regenerated state in which the voltage was recovered to an initial level after the lifetime of the p-type crystalline silicon was degraded, and the treatment time of the LS2 treatment was 92 h. The regenerated state was determined according to the same standards as in the LS1 treatment.

The calculation results and the measurement results obtained by using model equations were compared to each other to confirm whether LeTID and BO-LID were separated from each other. In the model equations, both LeTID and BO-LID were described by one set of three state reactions, assuming that reverse reactions did not occur between states. The following equations were used for each of LeTID and BO-LID as the model equations.

[Math. 1]

$$\frac{\partial N_A}{\partial t} = -k_{AB} N_A$$

$$\frac{\partial N_B}{\partial t} = k_{AB} N_A - k_{BC} N_B$$

$$\frac{\partial N_C}{\partial t} = k_{BC} N_B$$

$$\cdot \cdot \cdot (1)$$

Here, $k_{AB}$ represents the reaction rate constant from the state A to the state B, and $k_{BC}$ represents the reaction rate constant from the state B to the state C. $N_A$ represents a defect precursor density, $N_B$ represents an active defect density, and Nc represents an inactivated defect density. Note that, the defect density is used to mean the normalized defect density (NDD) unless otherwise specified.

A fitting method will be described. First, the defect density $N_B$ is fit to the normalized defect density derived from a change in the minority carrier lifetime using the defect precursor density $N_A$ and the reaction rate constants $k_{AB}$ and $k_{BC}$ as fit parameters. When LeTID and BO-LID occur simultaneously, the change in the lifetime calculated from the measured values does not sufficiently fit in the fitting by one set of three state models.

The fitting was performed by the following method. Conversion from $V_{oc}(t)$ to $\tau(t)$ was performed using the following relational equation of $\tau_{eff}$ and $V_{oc}$.

$$\tau_{eff} = \{n_i^2 e \times p(qV_{oc}/kT)\}/\{J_{ph}(N_{AC} + \Delta n)/qW\}$$

The normalized defect density (NDD) at the time t in the LS treatment was obtained from a reciprocal difference between the obtained measurement lifetime $\tau(t)$ at the time t in the LS treatment and the measurement lifetime $\tau(t_0)$ at the reference time point $t_0$ having no defects

$$NDD = 1/(\tau(t)) - 1/\tau(t_0)$$

Here, when the sample had defects in the initial state before the LS treatment, NDD after regeneration was negative, NDD(t) was corrected by adding a constant to NDD(t) so that the minimum value of NDD reached 0 for fitting.

The differential equation of Equation (1) was solved using $N_A$, $k_{AB}$, and $k_{BC}$ as the fitting parameters with the above-described reaction models, and the fitting was performed such that the difference between the number $N_B(t)$ of defects in a recombination active state and corrected NDD(T) was minimized.

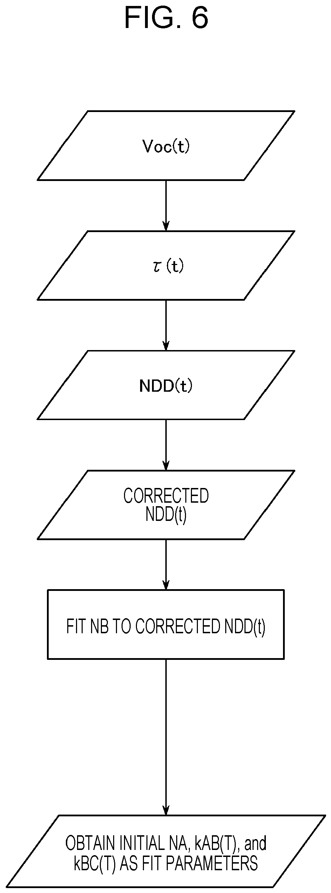

$V_{oc}$ was calculated from the fitting parameters by the following method. The initial $N_A$, $k_{AB}$, and $k_{BC}$ obtained by fitting were used to calculate $N_B$. When the fitting was suitable, $N_B$ was regarded as the corrected normalized defect density (NDD). The original NDD was obtained by subtracting the constant added during the correction. A reciprocal $1/\tau_{eff}(t_0)$ of the minority carrier lifetime measured at the reference time point $t_0$ having no defect was added to NDD to obtain $\tau_{eff}(t)$. $V_{oc}$ was obtained by using the equation used for the conversion from $V_{oc}$ to $\tau_{eff}(t)$. When the fitting parameters of data if BO-LID was dominant were used, the obtained $V_{oc}$ was regarded as the change in time of $V_{oc}$ affected by BO-LID at the temperature T. A method of calculating the fitting parameters is illustrated in FIG. 6.

Further, a reservoir state of LeTID is sequentially changed from the defect precursor state, the defect state, and the regenerated state when the LS1 treatment and the DA treatment were sufficiently performed on the p-type crystalline silicon. The reservoir state is finally exhausted, and the entire p-type crystalline silicon is considered to have reached the regenerated state. When the DA treatment is performed on the p-type crystalline silicon at a stage where the entire p-type crystalline silicon has reached a regenerated state, only BO-LID occurs without occurrence of LeTID because the reservoir state is exhausted.

Therefore, when the change in minority carrier lifetime calculated from the measured values in the LS2 treatment after the DA treatment is fit by one set of three state models, only BO-LID occurs, and thus the change in minority carrier lifetime is fit satisfactorily only by one set of three state models. When the minority carrier lifetime in the LS2 treatment is sufficiently fit, the DA treatment and the LS treatment were performed again until the reservoir state of LeTID is exhausted. Thus, the influence of BO-LID can be grasped.

LeTID and BO-LID can be separated from each other by subtracting a change in the minority carrier lifetime when only BO-LID occurs from the change in lifetime when LeTID and BO-LID occur simultaneously. Whether LeTID and BO-LID are separated from each other can be determined based on whether the subtracted change in lifetime can be satisfactorily fit by one set of three state models.

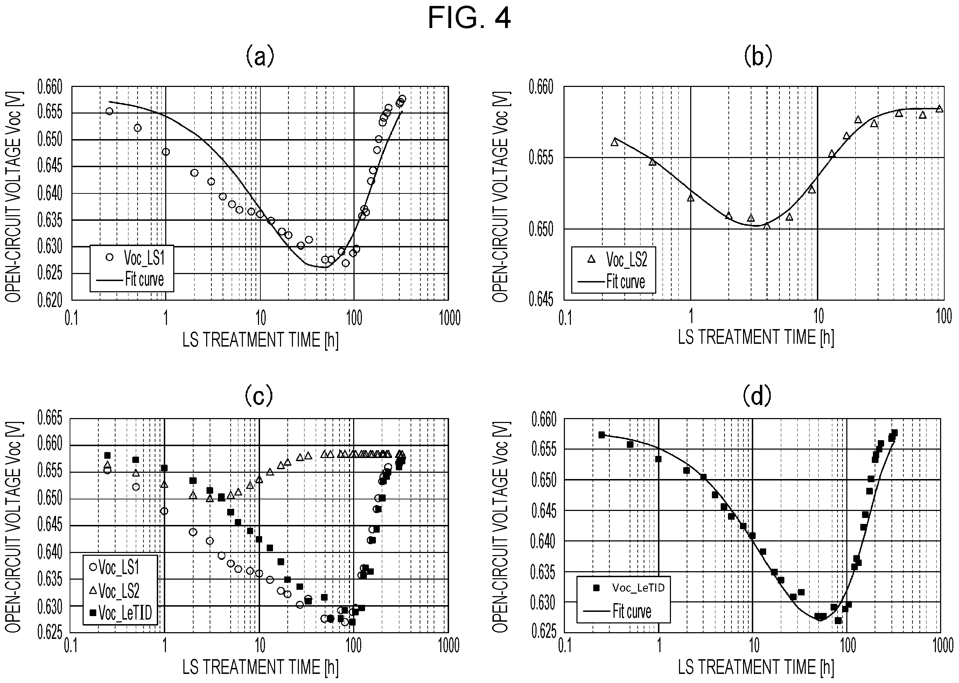

A change in the voltage $V_{oc}$ obtained by performing LS 1 on the p-type crystalline silicon with simulated sunlight at 1 sun/95°C for 322 h is illustrated in FIG 4(a). Further, a change in $V_{oc}$ calculated by using the parameters obtained from the fitting with three state models without a reverse reaction is illustrated by the solid line. The fitting was performed by fitting the concentration of $N_B$ to the reciprocal of the minority carrier lifetime. Therefore, the solid line in FIG. 4 denotes the change in $V_{oc}$ calculated by using $N_B$ that is fit. The calculated change is not satisfactorily fit to the actual change in $V_{oc}$. Whether the fitting was sufficiently fit was determined based on normalized root mean squared error (RMSE). The maximum normalized RMSE in this fitting was 0.115.

A change in $V_{oc}$ obtained by performing the LS1 treatment on the p-type crystalline silicon, performing the DA treatment at 175°C for 30 minutes, and performing the LS2 treatment with simulated sunlight again at 1 sun/95°C for 92 h is illustrated in FIG. 4(b). Further, the fitting results were indicated by solid lines. The three state models without a reverse reaction are satisfactorily fit to the change in $V_{oc}$ obtained by the LS2 treatment. Therefore, the degradation and the behavior of recovery by the LS2 are considered due to BO-LID.

The results obtained by calculating the influence of BO-LID at the same time scale as in the LS2 treatment and the LS1 are illustrated in FIG. 4(c). Further, the results (LS1 - LS2) obtained by subtracting the influence of BO-LID from (white circles of FIG 4(c)) using $V_{oc}$ in the initial LS 1 treatment are illustrated in black squares. The results obtained by performing fitting on LS1 - LS2 are illustrated in FIG. 4(d). The fitting in FIG. 4(d) was satisfactorily made than the fitting in FIG. 4(a). Therefore, LeTID and BO-LID are considered to be separated. Whether the fitting was sufficiently fit was determined based on the minimum normalized RMSE in this fitting. The normalized RMSE was 0.0689.

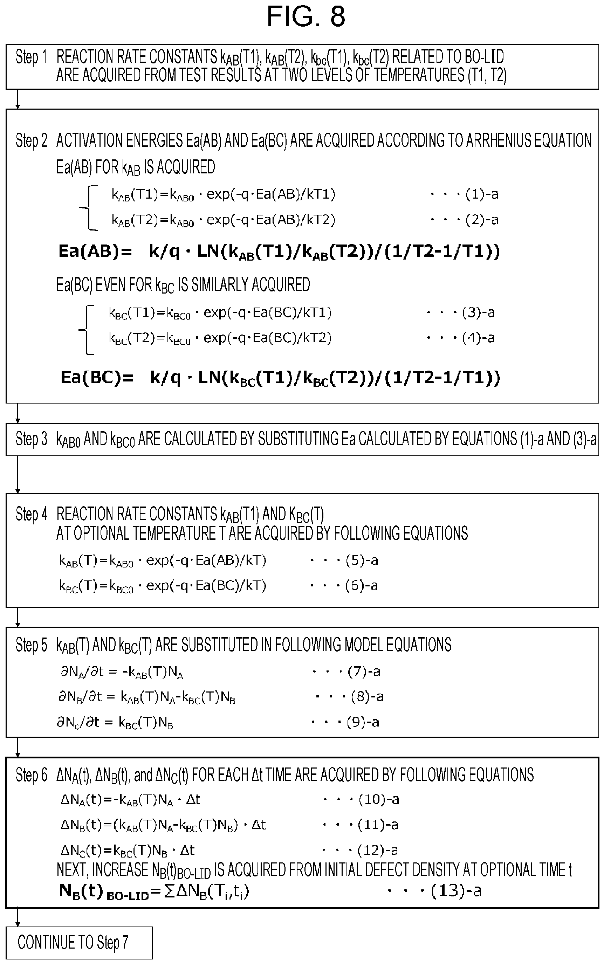

FIGS. 8, 9, and 10 are flowcharts illustrating the method of predicting the power degradation rate of the photovoltaic device from the degradation behaviors of BO-LID and LeTID according to the examples of the present invention.

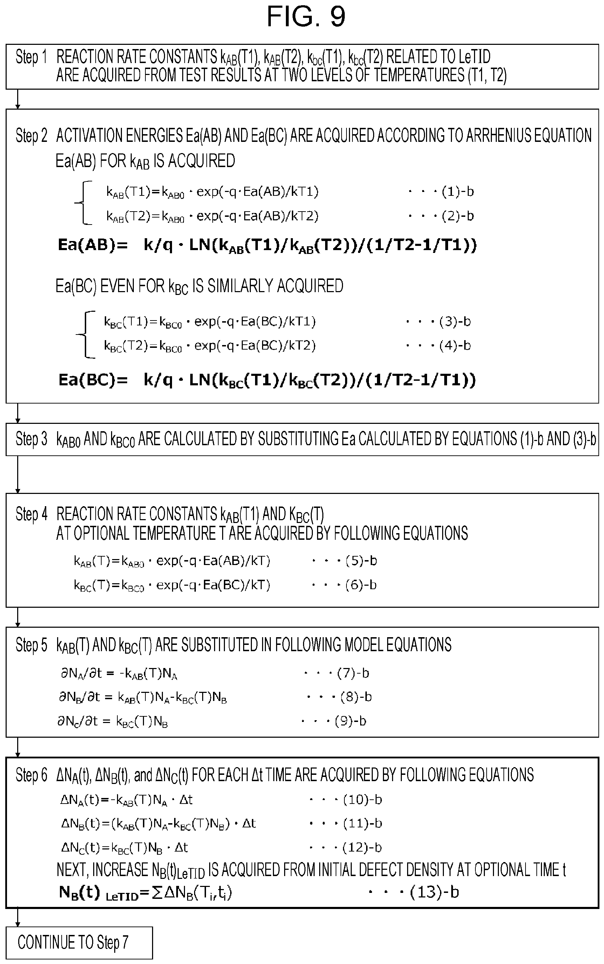

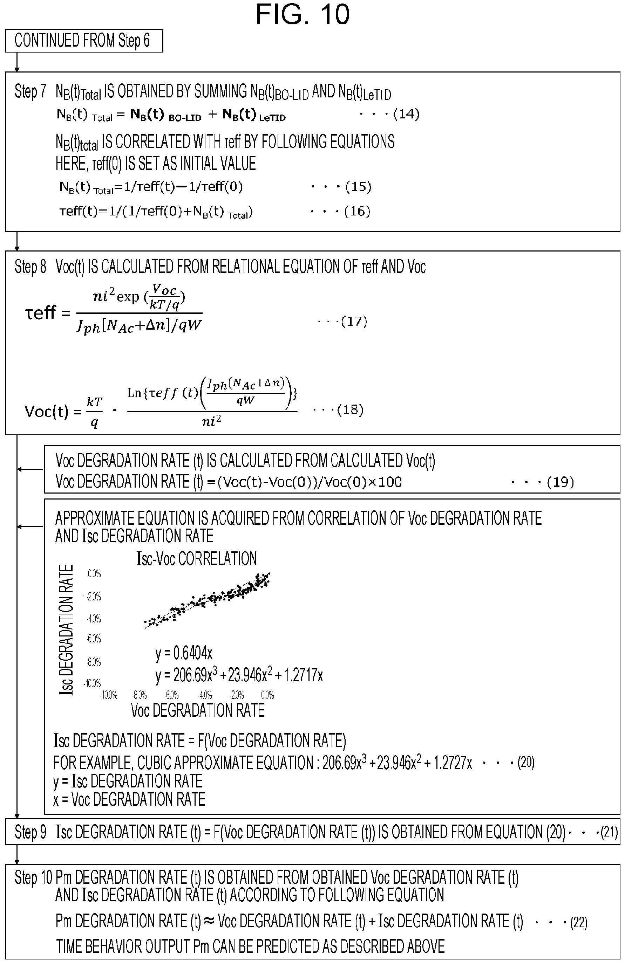

The method of predicting the degradation rate with time due to BO-LID and LeTID of a solar module will be described according to the flowcharts illustrated in FIGS. 8, 9, and 10, based on the reaction rate coefficients $k_{AB}(T1)$, $k_{AB}(T2)$, $k_{BC}(T1)$, and $k_{BC}(T2)$ with respect to each of BO-LID and LeTID obtained by performing the above-described light soaking test at two levels of temperatures (the first temperature T1 and the second temperature T2). FIG. 8 illustrates the flow until an equation that provides a change in time in consideration of the temperature dependence of BO-LID is derived, and FIG. 9 illustrates the flow until an equation that provides a change in time in consideration of the temperature dependence of LeTID is derived. Further, FIG. 10 illustrates the flow until an equation that predicts the power degradation rates due to BO-LID and LeTID of the solar module is derived in consideration of the equations derived by the procedures illustrated in FIGS. 8 and 9.

Hereinafter, the procedure for deriving the equation that provides the change in time in consideration of the temperature dependence of BO-LID will be described with reference to FIG. 8.

First, in Step 1, the reaction rate constants $k_{AB}(T1)$, $k_{AB}(T2)$, $k_{BC}(T1)$, and $k_{BC}(T2)$ are acquired from the light soaking test results at two levels of temperatures (T1 and T2).

Next, in Step 2, the activation energy Ea(AB) is acquired from $k_{AB}(T1)$ and $k_{AB}(T2)$, and Equation (1)-a and Equation (2)-a, and the activation energy Ea(BC) is acquired from $k_{BC}(T1)$ and $k_{BC}(T2)$, and Equation (3)-a and Equation (4)-a.

Next, in Step 3, a constant $k_{AB0}$, which is a coefficient of the reaction rate constant, is acquired from the activation energy Ea(AB) and Equation (1)-a, and a constant $k_{BC0}$ is similarly acquired from the activation energy Ea(BC) and Equation (3)-a.

Next, in Step 4, Equation (5)-a and Equation (6)-a that provide the reaction rate coefficients $k_{AB}(T)$ and $k_{BC}(T)$ at an optional temperature T using the activation energy Ea obtained up to Step 3 and the coefficients of the reaction rate constants.

Next, in Step 5, the reaction rate constants $k_{AB}(T)$ and $k_{BC}(T)$ obtained in Step 4 are substituted in partial differential equations describing time behaviors of the defect densities ($N_A$, $N_B$, $N_C$) that provide the time behaviors in consideration of the temperature dependence of BO-LID, that is, Equations (7)-a, (8)-a, and (9)-a.

Next, in Step 6, equations of providing minute increase amounts $\Delta N$ ($\Delta N_A$, $\Delta N_B$, and $\Delta N_C$) of the defect densities with respect to the minute time $\Delta t$ are obtained by replacing the partial differential equations with respect to the time provided in Step 5 with the difference equations with respect to the time. $\Delta N_A$ is provided by Equation (10)-a, $\Delta N_B$ is provided by Equation (11)-a, and $\Delta N_C$ is provided by Equation (12)-a. Here, in consideration of the situation where the time transition is expressed by a method of continuously provided in units of minute time $\Delta t$, $N_B(t)_{BO\text{-}LID}$ expressing the time behavior of the defect density $N_B$ that provides the time behavior of BO-LID can be acquired by Equation (13)-a in terms of an increase with respect to the initial value. Note that, i in Equation (13)-a denotes the i-th time when the time unit is defined as $\Delta t$.

Hereinbefore, the procedure for deriving the equation of providing the time behavior $N_B(t)$BO-LID of the defect density that provides the time behavior in consideration of the temperature dependence of BO-LID has been described with reference to FIG. 8. The same applies to a case of deriving the equation of providing the time behavior $N_B(t)_{LeTID}$ of the defect density that provides the time behavior in consideration of the temperature dependence of LeTID and Equation (13)-b can be acquired by the same procedure as illustrated in FIG. 9.

Hereinafter, the description is continued with reference to FIG. 10. Next, in Step 7, Equation (14) that provides the total defect density $N_B(t)_{Total}$ is obtained by adding $N_B(t)_{BO\text{-}LID}$ and $N_B(t)_{LcTID}$ obtained in Step 6. Further, the total defect density $N_B(t)_{Total}$ is correlated with the minority carrier lifetime $\tau_{eff}(t)$ by Equation (15). Here, the defect density N and the minority carrier lifetime $\tau$ are in a relationship of $N = 1/\{\sigma \cdot v_{th} \cdot \tau\}$ in good approximation. Here, $\sigma$ represents a capture cross section of the minority carriers, and $v_{th}$ represents a thermal velocity of the minority carriers. Note that, if the defect density N is discussed in the NDD unit [1/s] as described above, the discussion may be made by directly connecting the defect density N to $\tau$ without going through $\sigma$ and $v_{th}$. That is, Equation (15) is an equation that relates a difference between the initial lifetime $\tau_{eff}(0)$ and the lifetime $\tau_{eff}(t)$ after the t time of light irradiation to a sum of an increase in defect density that provides BO-LID after the t time of light irradiation and an increase in defect density that provides LeTID. Equation (16) that expresses $\tau_{eff}(t)$ is obtained by transforming Equation (15).

Next, in Step 8, the minority carrier lifetime $\tau_{eff}(t)$ is correlated with the open-circuit voltage $V_{oc}$ by Equation (17), and Equation (18) that expresses the time behavior $V_{oc}(t)$ of $V_{oc}$ is obtained by transforming Equation (17).

Next, in Step 9, $V_{oc}(t)$ is re-expressed as a change rate in a case of normalization with initial $V_{oc}$, that is, a $V_{oc}$ degradation rate (t) to obtain Equation (19). Next, Equation (21) that expresses an $I_{sc}$ degradation rate (t) is obtained by using Equation (20) that expresses the correlation between the $V_{oc}$ degradation rate and the $I_{sc}$ degradation rate obtained as the results of the light irradiation test. Here, the coefficients in Relational Equation (20) are not universal values, which are changed depending on the type of substrate, the structure of an element, and the like. It is desirable that Relational Equation (20) is acquired depending on the type of substrate, the structure of an element, and the like.

Finally, in Step 10, Equation (22) that provides the Pm degradation rate (t) is obtained by adding the $V_{oc}$ degradation rate (t) and the $I_{sc}$ degradation rate (t).

As described above, the time behaviors considering the temperature dependence of the power degradation rate of the solar module due to BO-LID and LeTID can be acquired. For example, if annual transition information related to the solar module temperature is provided, the degree of the annual Pm degradation rate due to BO-LID and LeTID can be predicted. The Pm degradation rate with time due to BO-LID and LeTID can be predicted if the prediction of the annual Pm degradation rate is performed for each year following the first year.

Note that, the air temperature and the solar module temperature are known to be established based on the following relationships as the standards. Here, the temperature is in units of (°C), NOCT stands for nominal operating cell temperature, and S represents the amount of incident light of sunlight (mW/cm$^2$). NOCT described in the specification of the photovoltaic device manufacturer may be used.

$$\text{Solar module temperature} = \text{air temperature} + \Delta T$$

$$\Delta T = (\text{NOCT - 20}) \times S/80$$

Note that, when the time transition information of S described above is difficult to acquire, a defect increase amount $\Delta N$ caused by photodegradation per day can be expressed as follows using a daily maximum air temperature Tmax and an effective stress hour heff. Here, the unit of heff is the same as the time unit $\Delta t$. In addition, $\Delta N$ is described using a case of $\Delta N_B$ as an example.

$$\text{Daily maximum module temperature Tmp} = \text{daily maximum air temperature Tmax} + \Delta T$$

$\Delta T = 25°C$ (standard for outdoor structure), $35°C$ (standard for residential roof structure)

$$\Delta N_B \text{ per day} \approx (k_{AB}(Tmp) \times N_A - k_{BC}(Tmp) \times N_B) \times heff$$

When $\Delta N_B$ per day is accumulated over 365 days for a year, $\Delta N_B$ per year can be calculated. Similarly, $\Delta N_B$ for each year following the first year can also be calculated. The time behavior of the Pm degradation rate of the solar module can be calculated if the time behavior of $\Delta N_B$ can be calculated as described above.

Note that, a phenomenon of degradation and recovery on a yearly basis (for example, a phenomenon of degradation in the summer and recovery in the winter) is known as a photodegradation phenomenon of a solar module, and this degradation and recovery phenomenon is known to be repeated every year after the first year. The representative photodegradation phenomena BO-LID and LeTID are also considered to exhibit the same behavior. For example, an operation of resetting NA, which is the defect precursor density, to a predetermined value (for example, the initial value) after a predetermined time period (for example, in the winter) can be performed in the procedure for sequentially calculating each of the defect densities according to the time transition so that the time behavior of the Pm degradation rate of the solar module can be predicted in consideration of the phenomenon. Alternatively, an operation of reducing $N_B$ by a predetermined amount after a predetermined time period (for example, in the winter) and adding the reduced amount of $N_B$ to $N_A$ can also be performed. The selection of these operations and the adjustment of the predetermined values can be carried out based on the results of the outdoor exposure test or the results of the light irradiation test performed by simulating the outdoor exposure test and changing the temperature over time.

Hereinbefore, the method of predicting the power degradation rate of a photovoltaic device based on the degradation behaviors of BO-LID and LeTID has been described in detail. The prediction of the Pm degradation rate with time is indispensable for prediction of the power generation amount of a solar module and for calculation of the power generation cost (yen/kwh), and thus the prediction of the Pm degradation rate with time is extremely important industrially.

Throughout the specification, when a part "has" or "includes" a certain constituent element, this denotes that the part can further have other constituent elements without eliminating other constituent elements unless specifically stated to the contrary.

Further, the term "- unit" denotes a unit that has at least one function or processes at least one operation, which may be embodied as hardware or software or a combination of hardware and software.

In addition, the constituent elements in the embodiment may be replaced with known constituent elements. Further, the above-described variations may be appropriately used in combination.

For example, as the substrate, Czochralski silicon (Cz-Si), floating Zone silicon (FZ-Si), multicrystalline silicon (mc-Si), or mono-like silicon may be used.

As described above, according to the present invention, the method of measuring light and elevated temperature induced degradation and the measuring device therefor that enable separation the influence of BO-LID from LeTID can be provided, and thus industrial utilization value is high. Further, according to the present invention, the degradation rate with time due to the photodegradation phenomenon of a photovoltaic device can be more accurately predicted based on the degradation behavior in consideration of the temperature dependence related to LeTID and BO-LID, and thus the industrial utilization value is high.

**Claims**

1. A method of measuring light and elevated temperature induced degradation, the method comprising:

   a first light soaking step of injecting carriers into p-type crystalline silicon and maintaining the p-type crystalline silicon at 50°C or higher and 150°C or lower until the p-type crystalline silicon has reached a regenerated state;
   a first measurement step of measuring a first degradation amount of the p-type crystalline silicon in the first light soaking step;
   a dark annealing step of performing a heat treatment on the p-type crystalline silicon at higher than 150°C and 250°C or lower;
   a second light soaking step of injecting carriers into the p-type crystalline silicon and maintaining the p-type crystalline silicon at 50°C or higher and 150°C or lower until the p-type crystalline silicon has reached a regenerated state;
   a second measurement step of measuring a second degradation amount of the p-type crystalline silicon in the second light soaking step; and
   a calculation step of calculating a light and elevated temperature induced degradation amount of the p-type crystalline silicon based on the first degradation amount and the second degradation amount.

**2.** The method of measuring light and elevated temperature induced degradation according to claim 1,

wherein a time for maintaining the p-type crystalline silicon at 50°C or higher and 150°C or lower in the first light soaking step is 0.25 hours or longer and 1000 hours or shorter,
a time for performing a heat treatment on the p-type crystalline silicon at higher than 150°C and 250°C or lower in the dark annealing step is 5 minutes or longer and 60 minutes or shorter, and
a time for maintaining the p-type crystalline silicon at 25°C or higher and 150°C or lower in the second light soaking step is 0.25 hours or longer and 1000 hours or shorter.

**3.** The method of measuring light and elevated temperature induced degradation according to claim 1 or 2,
wherein the p-type crystalline silicon is maintained at 50°C or higher and 150°C or lower a plurality of times in the first light soaking step.

**4.** The method of measuring light and elevated temperature induced degradation according to any one of claims 1 to 3,
wherein a voltage of the p-type crystalline silicon after the injection of carriers is -2 mV or greater and 2 mV or less with respect to a voltage of the p-type crystalline silicon before the injection of carriers.

**5.** The method of measuring light and elevated temperature induced degradation according to any one of claims 1 to 4,
wherein the temperature of maintaining the p-type crystalline silicon in the first light soaking step is the same as the temperature of maintaining the p-type crystalline silicon in the second light soaking step.

**6.** The method of measuring light and elevated temperature induced degradation according to claim 5,

wherein the first light soaking step and the second light soaking step are performed on the p-type crystalline silicon at a first temperature,
the first light soaking step and the second light soaking step are performed on the p-type crystalline silicon at a second temperature, and
the light and elevated temperature induced degradation amount is calculated based on the first degradation amount and the second degradation amount obtained at the first temperature and the first degradation amount and the second degradation amount obtained at the second temperature.

**7.** A method of predicting a power degradation rate of a photovoltaic device, the method comprising:

a step of measuring degradation behaviors of BO-LID and LeTID of a photovoltaic device, which is p-type crystalline silicon, by the method of measuring light and elevated temperature induced degradation according to any one of claims 1 to 6; and
a step of calculating a power degradation rate of the photovoltaic device from the measured degradation behaviors of BO-LID and LeTID.

# FIG. 1

EP 4 300 816 A1

| RELATED ART | BO-LID STABILIZATION TREATMENT | LeTID TEST |
|---|---|---|

25°C
ONE DAY TO ONE WEEK       >50°C

| PRESENT CASE | LS-1:1sun (LeTID + BO-LID) | DA TREATMENT | LS-2:1sun (BO-LID) |
|---|---|---|---|

95°C
UNTIL RECOVERY    175°C
30 min    95°C
UNTIL RECOVERY

# FIG. 2

(a) BO-LID : LS-DA CYCLE

# FIG. 3

(b) LeTID : LS-DA CYCLE

FIG. 4

# FIG. 5

START

LS1 TREATMENT

MEASUREMENT (Voc AND THE LIKE)

REGENERATED? — NO

YES

DA TREATMENT

MEASUREMENT (Voc AND THE LIKE)

LS2 TREATMENT

MEASUREMENT (Voc AND THE LIKE)

REGENERATED? — NO

YES

Fitting

FIT? — NO

YES

INITIAL NA, kAB(T), and kBC(T) OF BO-LID

EXTRACT INFLUENCE OF BO-LID ON MEASURED VALUE AT TEMPERATURE T

EXTRACT INFLUENCE OF LeTID BY REMOVING INFLUENCE OF BO-LID FROM LS1 MEASUREMENT DATA

Fitting

INITIAL NA, kAB(T), and kBC(T) OF LeTID

EP 4 300 816 A1

# FIG. 6

Voc(t)

$\tau$ (t)

NDD(t)

CORRECTED
NDD(t)

FIT NB TO CORRECTED NDD(t)

OBTAIN INITIAL NA, kAB(T), and
kBC(T) AS FIT PARAMETERS

# FIG. 7

# FIG. 8

Step 1  REACTION RATE CONSTANTS $k_{AB}(T1)$, $k_{AB}(T2)$, $k_{bc}(T1)$, $k_{bc}(T2)$ RELATED TO BO-LID ARE ACQUIRED FROM TEST RESULTS AT TWO LEVELS OF TEMPERATURES (T1, T2)

Step 2  ACTIVATION ENERGIES Ea(AB) AND Ea(BC) ARE ACQUIRED ACCORDING TO ARRHENIUS EQUATION

Ea(AB) FOR $k_{AB}$ IS ACQUIRED

$$k_{AB}(T1)=k_{AB0} \cdot \exp(-q \cdot Ea(AB)/kT1) \qquad \cdots (1)\text{-a}$$
$$k_{AB}(T2)=k_{AB0} \cdot \exp(-q \cdot Ea(AB)/kT2) \qquad \cdots (2)\text{-a}$$

**Ea(AB)= $k/q \cdot LN(k_{AB}(T1)/k_{AB}(T2))/(1/T2-1/T1)$**

Ea(BC) EVEN FOR $k_{BC}$ IS SIMILARLY ACQUIRED

$$k_{BC}(T1)=k_{BC0} \cdot \exp(-q \cdot Ea(BC)/kT1) \qquad \cdots (3)\text{-a}$$
$$k_{BC}(T2)=k_{BC0} \cdot \exp(-q \cdot Ea(BC)/kT2) \qquad \cdots (4)\text{-a}$$

**Ea(BC)= $k/q \cdot LN(k_{BC}(T1)/k_{BC}(T2))/(1/T2-1/T1)$**

Step 3  $k_{AB0}$ AND $k_{BC0}$ ARE CALCULATED BY SUBSTITUTING Ea CALCULATED BY EQUATIONS (1)-a AND (3)-a

Step 4  REACTION RATE CONSTANTS $k_{AB}(T1)$ AND $K_{BC}(T)$ AT OPTIONAL TEMPERATURE T ARE ACQUIRED BY FOLLOWING EQUATIONS

$$k_{AB}(T)=k_{AB0} \cdot \exp(-q \cdot Ea(AB)/kT) \qquad \cdots (5)\text{-a}$$
$$k_{BC}(T)=k_{BC0} \cdot \exp(-q \cdot Ea(BC)/kT) \qquad \cdots (6)\text{-a}$$

Step 5  $k_{AB}(T)$ AND $k_{BC}(T)$ ARE SUBSTITUTED IN FOLLOWING MODEL EQUATIONS

$$\partial N_A/\partial t = -k_{AB}(T)N_A \qquad \cdots (7)\text{-a}$$
$$\partial N_B/\partial t = k_{AB}(T)N_A - k_{BC}(T)N_B \qquad \cdots (8)\text{-a}$$
$$\partial N_c/\partial t = k_{BC}(T)N_B \qquad \cdots (9)\text{-a}$$

Step 6  $\Delta N_A(t)$, $\Delta N_B(t)$, and $\Delta N_C(t)$ FOR EACH $\Delta t$ TIME ARE ACQUIRED BY FOLLOWING EQUATIONS

$$\Delta N_A(t)=-k_{AB}(T)N_A \cdot \Delta t \qquad \cdots (10)\text{-a}$$
$$\Delta N_B(t)=(k_{AB}(T)N_A - k_{BC}(T)N_B) \cdot \Delta t \qquad \cdots (11)\text{-a}$$
$$\Delta N_C(t)=k_{BC}(T)N_B \cdot \Delta t \qquad \cdots (12)\text{-a}$$

NEXT, INCREASE $N_B(t)_{BO\text{-}LID}$ IS ACQUIRED FROM INITIAL DEFECT DENSITY AT OPTIONAL TIME t

**$N_B(t)_{BO\text{-}LID}=\Sigma \Delta N_B(T_i,t_i)$** $\qquad \cdots (13)\text{-a}$

CONTINUE TO Step 7

# FIG. 9

Step 1 REACTION RATE CONSTANTS $k_{AB}(T1)$, $k_{AB}(T2)$, $k_{bc}(T1)$, $k_{bc}(T2)$ RELATED TO LeTID
ARE ACQUIRED FROM TEST RESULTS AT TWO LEVELS OF TEMPERATURES (T1, T2)

Step 2 ACTIVATION ENERGIES Ea(AB) AND Ea(BC) ARE ACQUIRED ACCORDING TO ARRHENIUS EQUATION
Ea(AB) FOR $k_{AB}$ IS ACQUIRED

$$k_{AB}(T1) = k_{AB0} \cdot \exp(-q \cdot Ea(AB)/kT1) \qquad \cdots (1)\text{-b}$$
$$k_{AB}(T2) = k_{AB0} \cdot \exp(-q \cdot Ea(AB)/kT2) \qquad \cdots (2)\text{-b}$$

**Ea(AB)= k/q · LN($k_{AB}$(T1)/$k_{AB}$(T2))/(1/T2-1/T1))**

Ea(BC) EVEN FOR $k_{BC}$ IS SIMILARLY ACQUIRED

$$k_{BC}(T1) = k_{BC0} \cdot \exp(-q \cdot Ea(BC)/kT1) \qquad \cdots (3)\text{-b}$$
$$k_{BC}(T2) = k_{BC0} \cdot \exp(-q \cdot Ea(BC)/kT2) \qquad \cdots (4)\text{-b}$$

**Ea(BC)= k/q · LN($k_{BC}$(T1)/$k_{BC}$(T2))/(1/T2-1/T1))**

Step 3 $k_{AB0}$ AND $k_{BC0}$ ARE CALCULATED BY SUBSTITUTING Ea CALCULATED BY EQUATIONS (1)-b AND (3)-b

Step 4 REACTION RATE CONSTANTS $k_{AB}(T1)$ AND $K_{BC}(T)$
AT OPTIONAL TEMPERATURE T ARE ACQUIRED BY FOLLOWING EQUATIONS

$$k_{AB}(T) = k_{AB0} \cdot \exp(-q \cdot Ea(AB)/kT) \qquad \cdots (5)\text{-b}$$
$$k_{BC}(T) = k_{BC0} \cdot \exp(-q \cdot Ea(BC)/kT) \qquad \cdots (6)\text{-b}$$

Step 5 $k_{AB}(T)$ AND $k_{BC}(T)$ ARE SUBSTITUTED IN FOLLOWING MODEL EQUATIONS

$$\partial N_A/\partial t = -k_{AB}(T)N_A \qquad \cdots (7)\text{-b}$$
$$\partial N_B/\partial t = k_{AB}(T)N_A - k_{BC}(T)N_B \qquad \cdots (8)\text{-b}$$
$$\partial N_c/\partial t = k_{BC}(T)N_B \qquad \cdots (9)\text{-b}$$

Step 6 $\Delta N_A(t)$, $\Delta N_B(t)$, and $\Delta N_C(t)$ FOR EACH $\Delta t$ TIME ARE ACQUIRED BY FOLLOWING EQUATIONS

$$\Delta N_A(t) = -k_{AB}(T)N_A \cdot \Delta t \qquad \cdots (10)\text{-b}$$
$$\Delta N_B(t) = (k_{AB}(T)N_A - k_{BC}(T)N_B) \cdot \Delta t \qquad \cdots (11)\text{-b}$$
$$\Delta N_C(t) = k_{BC}(T)N_B \cdot \Delta t \qquad \cdots (12)\text{-b}$$

NEXT, INCREASE $N_B(t)_{LeTID}$ IS ACQUIRED FROM INITIAL DEFECT DENSITY AT OPTIONAL TIME t
**$N_B(t)_{LeTID} = \Sigma \Delta N_B(T_i, t_i)$ $\cdots$ (13)-b**

CONTINUE TO Step 7

# FIG. 10

CONTINUED FROM Step 6

Step 7  $N_B(t)_{Total}$ IS OBTAINED BY SUMMING $N_B(t)_{BO-LID}$ AND $N_B(t)_{LeTID}$

$$N_B(t)_{Total} = N_B(t)_{BO-LID} + N_B(t)_{LeTID} \qquad \cdots (14)$$

$N_B(t)_{total}$ IS CORRELATED WITH τeff BY FOLLOWING EQUATIONS
HERE, τeff(0) IS SET AS INITIAL VALUE

$$N_B(t)_{Total} = 1/\tau eff(t) - 1/\tau eff(0) \qquad \cdots (15)$$

$$\tau eff(t) = 1/(1/\tau eff(0) + N_B(t)_{Total}) \qquad \cdots (16)$$

Step 8  Voc(t) IS CALCULATED FROM RELATIONAL EQUATION OF τeff AND Voc

$$\tau eff = \frac{ni^2 \exp\left(\frac{Voc}{kT/q}\right)}{J_{ph}[N_{Ac} + \Delta n]/qW} \qquad \cdots (17)$$

$$Voc(t) = \frac{kT}{q} \cdot \frac{\text{Ln}\left\{\tau eff(t)\left(\frac{J_{ph}(N_{Ac} + \Delta n)}{qW}\right)\right\}}{ni^2} \qquad \cdots (18)$$

Voc DEGRADATION RATE (t) IS CALCULATED FROM CALCULATED Voc(t)
Voc DEGRADATION RATE (t) = (Voc(t)-Voc(0))/Voc(0)×100 $\qquad \cdots (19)$

APPROXIMATE EQUATION IS ACQUIRED FROM CORRELATION OF Voc DEGRADATION RATE
AND Isc DEGRADATION RATE

Isc-Voc CORRELATION

y = 0.6404x
y = 206.69x³ + 23.946x² + 1.2717x

Isc DEGRADATION RATE = F(Voc DEGRADATION RATE)
FOR EXAMPLE, CUBIC APPROXIMATE EQUATION : 206.69x³ + 23.946x² + 1.2727x $\cdots (20)$
y = Isc DEGRADATION RATE
x = Voc DEGRADATION RATE

Step 9  Isc DEGRADATION RATE (t) = F(Voc DEGRADATION RATE (t)) IS OBTAINED FROM EQUATION (20) $\cdots (21)$

Step 10  Pm DEGRADATION RATE (t) IS OBTAINED FROM OBTAINED Voc DEGRADATION RATE (t)
AND Isc DEGRADATION RATE (t) ACCORDING TO FOLLOWING EQUATION

Pm DEGRADATION RATE (t) ≈ Voc DEGRADATION RATE (t) + Isc DEGRADATION RATE (t) $\cdots (22)$

TIME BEHAVIOR OUTPUT Pm CAN BE PREDICTED AS DESCRIBED ABOVE

## INTERNATIONAL SEARCH REPORT

| International application No. |
| --- |
| **PCT/JP2022/008041** |

### A.  CLASSIFICATION OF SUBJECT MATTER

*H02S 50/10*(2014.01)i
FI:  H02S50/10

According to International Patent Classification (IPC) or to both national classification and IPC

### B.  FIELDS SEARCHED

Minimum documentation searched (classification system followed by classification symbols)

H02S50/10

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

JSTPlus/JMEDPlus/JST7580 (JDreamIII)

### C.  DOCUMENTS CONSIDERED TO BE RELEVANT

| Category* | Citation of document, with indication, where appropriate, of the relevant passages | Relevant to claim No. |
| --- | --- | --- |
| A | SONDENA, Rune et al. Evolution of Defect Densities with Height in a HPMC-Si Ingot, AIP Conference Proceedings. 27 August 2019, vol. 2147, pp. 140010-1 to 140010-6<br>     entire text, all drawings | 1-7 |
| A | WO 2020/000793 A1 (SOUTH CHINA UNIVERSITY OF TECHNOLOGY) 02 January 2020 (2020-01-02)<br>     entire text, all drawings | 1-7 |
| A | JP 2014-222688 A (KYOCERA CORP.) 27 November 2014 (2014-11-27)<br>     entire text, all drawings | 1-7 |

☐ Further documents are listed in the continuation of Box C.          ☑ See patent family annex.

| | |
| --- | --- |
| *      Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
| --- | --- |
| **30 March 2022** | **12 April 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

<table>
<tr><td colspan="2"><b>INTERNATIONAL SEARCH REPORT</b><br>Information on patent family members</td><td colspan="2">International application No.<br><b>PCT/JP2022/008041</b></td></tr>
</table>

| Patent document cited in search report | Publication date (day/month/year) | Patent family member(s) | Publication date (day/month/year) |
|---|---|---|---|
| WO 2020/000793 A1 | 02 January 2020 | US 2021/0119074 A1<br>CN 109004061 A | |
| JP 2014-222688 A | 27 November 2014 | (Family: none) | |

Form PCT/ISA/210 (patent family annex) (January 2015)

EP 4 300 816 A1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021002988 A

**Non-patent literature cited in the description**

- **F. KERSTEN ; M. PANDER ; M. KOENTOPP ; M. TUREK ; W. BERGHOLZ ; T. PERNAU.** Towards a Test Standard of Light and Elevated Temperature-Induced Degradation. PV-Tech, 2020
- **M. J KERR ; A CUEVAS.** Generalized analysis of quasi-steady-state and transient decay open circuit voltage measurements. *Journal of Applied Physics,* 2002, vol. 91, 399
- **J. A. GIESECKE ; M. C. SCHUBERT ; D. WALTER ; W. WARTA.** Minority carrier lifetime in silicon wafers from quasi-steady-state photoluminescence. *Appl. Phys. Lett.,* 2010, vol. 97, 092109
- **A. C. N. WENHAM et al.** Hydrogen-induced degradation. *Proc. IEEE 7th World Conf. Photovolt. Energy Convers.,* June 2018, 1-8